# EUROPÄISCHE PATENTSCHRIFT

(11) **EP 4 286 818 B1**
(45) Veröffentlichungstag und Bekanntmachung des Hinweises auf die Patenterteilung: **13.08.2025**
(21) Anmeldenummer: 23176765.8
(22) Anmeldetag: 01.06.2023
(51) Int. Cl.: G01M 3/02, G01M 3/28

(54) **PRÜFEINRICHTUNG ZUM PRÜFEN VON FLUIDFÜHRENDEN BAUTEILEN**
TEST DEVICE FOR TESTING FLUID-CONDUCTING COMPONENTS
DISPOSITIF DE CONTRÔLE POUR CONTRÔLER DES COMPOSANTS CONDUISANT DES FLUIDES

(30) Priorität: 02.06.2022 DE 102022113915
(43) Veröffentlichungstag der Anmeldung: 06.12.2023
(60) Teilanmeldung: 25185537.5
(73) Patentinhaber: Rud. Prey GmbH, 24113 Kiel (DE)
(72) Erfinder: Prey, Thomas, 24105 Kiel (DE)
(74) Vertreter: Hauck Patent- und Rechtsanwälte PartmbB

(56) Entgegenhaltungen:
- WO-A2-2014/012065
- CN-A- 113 483 954
- CN-U- 210 464 833
- DE-A1- 102013 010 093
- DE-B4- 102013 226 191
- KR-A- 20030 085 840

## Beschreibung

Die Erfindung betrifft eine Prüfeinrichtung zum Prüfen von fluidführenden Bauteilen, insbesondere fluidführenden Armaturen und/oder fluidführenden Schläuchen, umfassend mindestens einen Prüfanschluss zum Anschließen mindestens eines zu prüfenden Bauteils, weiter umfassend mindestens eine Druckeinrichtung zum Erzeugen eines vorgegebenen Prüfdrucks in dem zu prüfenden Bauteil und/oder mindestens eine Unterdruckeinrichtung zum Erzeugen eines vorgegebenen Unterdrucks in dem zu prüfenden Bauteil.

Beispielsweise Feuerwehren benötigen zur Wasserbeförderung von einer Wasserentnahmestelle zu einem Brandherd diverse fluidführende Bauteile, insbesondere wasserführende Armaturen und Schläuche. Je nach Einsatzzweck sind Feuerwehrfahrzeuge speziell hierfür ausgestattet und mit unterschiedlichen Bauteilen bestückt. Wasserführende Bauteile unterliegen einer regelmäßigen Prüfpflicht. Da Feuerwehren häufig logistisch nicht umfangreich ausgestattet sind, insbesondere keine eigene Prüfhalle besitzen, ist es häufig erforderlich, die zu prüfenden Bauteile in entsprechende Prüfwerkstätten zu geben, wo sie geprüft werden können. Hierdurch entsteht erheblicher Aufwand.

Um diesem Problem zu begegnen, sind kleinere Prüfstationen vorgeschlagen worden, die auch unabhängig von größeren Prüfhallen zum Einsatz kommen können. Auch mit solchen Prüfstationen ist allerdings ein erheblicher Prüfaufwand verbunden. Insbesondere erfordert das Prüfen der Bauteile viele durch eine Bedienperson manuell durchzuführende Prüfschritte, insbesondere ein manuelles Einstellen eines vorgegebenen Prüfdrucks oder vorgegebenen Unterdrucks für eine Druck- bzw. Unterdruckprüfung eines solchen Bauteils. Auch müssen zu prüfende Bauteile in bestehenden kleineren Prüfeinrichtungen häufig umgekuppelt werden, um die erforderlichen Prüfschritte auszuführen. Dies ist nicht nur aufwendig, sondern auch fehleranfällig und eine ordnungsgemäße Dokumentation ist nicht zuverlässig möglich.

Aus DE 102013226191 B4 ist ein Verfahren sowie eine Prüfvorrichtung zur Prüfung von Schläuchen für Kraftfahrzeuge bekannt, wobei ein Prüfgas, insbesondere Luft, in ein erstes Ende eines zu prüfenden Schlauches injiziert wird und wobei ein Messwert für einen Prüfgas-Parameter erfasst wird.

Aus DE 102013010093 A1 ist eine Vorrichtung zum Prüfen von Rohrleitungen oder Schläuchen, insbesondere Löschschläuchen, auf Dichtheit bekannt. Die Vorrichtung umfasst eine Druckpumpe, die über eine erste Saugleitung mit einem Flüssigkeitsreservoir verbunden ist, und von der eine Druckleitung zu mindestens einer zu prüfenden Rohrleitung und/oder mindestens einem zu prüfenden Schlauch führt. In der Druckleitung ist ein Injektor angeordnet, der über eine zweite Saugleitung mit dem Flüssigkeitsreservoir verbunden ist, und der bis zu einem in der Druckleitung herrschenden Grenzdruck selbsttätig Flüssigkeit über die zweite Saugleitung aus dem Flüssigkeitsreservoir ansaugt und in die Druckleitung einspeist.

Aus KR 2003085840 A ist eine Vorrichtung zum Erkennen eines Druck- oder Unterdrucklecks in einem Flugzeugtanksystem bekannt. Mit der Vorrichtung soll ein Leck in dem Tanksystem im Zuge der Herstellung des Flugzeugs erkannt werden. Hierzu kann nacheinander ein Überdruck und ein Unterdruck in dem Tanksystem erzeugt und definiert gehalten werden. Mittels Druckmessung soll ein Leck in dem Tanksystem erkannt werden.

WO 2014/012065 A2 beschreibt ein Verschleißtestsystem für Herzventilprothesen und andere kardiovaskuläre Vorrichtungen. Ein Testkörper weist einen Kreisflusskanal auf, in dem ein Fluidkreispfad ausgebildet ist. Über einen mit dem Kanal gekoppelten Aktuator kann eine Antriebslast auf ein Fluid ausgeübt werden und ein Fluidfluss in dem Kanal erzeugt werden.

CN 113483954 A beschreibt eine in Wasser eingelassene Luftdichtheitsdetektiereinrichtung für ein Auspuffrohr eines Automobils sowie ein entsprechendes Verfahren. Dabei ist eine Wasserkammer zum Eintauchen des Auspuffrohrs vorgesehen zum Durchführen des Luftdichtheitstests.

CN 210464833 U beschreibt einen Brennstoffzellen-Druckhalte-Versuchsstand. Die Vorrichtung wird eingesetzt, um Dichtheitsprüfung von Brennstoffzellenstapeln durchzuführen. Die Vorrichtung umfasst einen mobilen Tragrahmen und eine oben auf dem mobilen Tragrahmen angeordnete Prüfplatte. Eine Gasflasche ist fest in dem mobilen Tragrahmen angeordnet, und eine Gasdruckumwandlungsvorrichtung ist an einer Gaszufuhröffnung des Gaszylinders angeordnet. Der Brennstoffzellenstapel wird mit Vorrichtung verbunden, um die Luftdichtheit des Brennstoffzellenstapels unter Gaszufuhr aus der Gasflasche zu prüfen.

Ausgehend von dem erläuterten Stand der Technik liegt der Erfindung die Aufgabe zugrunde, eine Prüfeinrichtung der eingangs genannten Art bereitzustellen, mit der eine Prüfung fluidführender Bauteile mit geringerem Aufwand und gleichzeitig jederzeit sicher und zuverlässig durchgeführt werden kann.

Die Erfindung löst die Aufgabe durch den Gegenstand des unabhängigen Anspruchs 1. Vorteilhafte Ausgestaltungen finden sich in den abhängigen Ansprüchen, der Beschreibung und den Figuren.

Für eine Prüfeinrichtung der eingangsgenannten Art löst die Erfindung die Aufgabe dadurch, dass die Prüfeinrichtung eine Steuereinrichtung umfasst, die dazu ausgebildet ist, einen Prüfvorgang des mindestens eines zu prüfenden Bauteils nach Vorgabe einer Bedienperson durchzuführen.

Bei den mit der Prüfeinrichtung zu prüfenden fluidführenden Bauteilen kann es sich insbesondere um fluidführende Armaturen und/oder fluidführende Schläuche handeln. Die Bauteile können insbesondere flüssigkeitsführend sein, vorzugsweise wasserführend. Es kann sich um Bauteile aus der Brandbekämpfung handeln, die von Feuerwehren genutzt werden. Als Bauteile beispielhaft genannt seien Saugschläuche, Standrohre, Strahlrohre, Druckbegrenzungsventile, Verteiler, Hebekissen sowie weitere wasserführende Armaturen und Systemtrenner.

Die erfindungsgemäße Prüfeinrichtung umfasst in an sich bekannter Weise mindestens einen Prüfanschluss zum Anschließen mindestens eines zu prüfenden Bauteils. Der Prüfanschluss kann grundsätzlich in beliebiger Weise ausgestaltet sein, je nachdem welche Anschlussmöglichkeiten die zu prüfenden Bauteile besitzen. Zum Beispiel in Deutschland kommen als Anschlüsse der Bauteile und somit auch als Prüfanschlüsse häufig sogenannte Storz-Kupplungen zum Einsatz. Sie werden in der Brandbekämpfung insbesondere bei Feuerwehren oder Wasserhydranten eingesetzt. Es handelt sich um nicht absperrende, symmetrische hermaphrodite Kupplungen mit Bajonettverschluss.

Die erfindungsgemäße Prüfeinrichtung umfasst weiterhin mindestens eine Druckeinrichtung zum Erzeugen eines vorgegebenen Prüfdrucks in dem zu prüfenden Bauteil und/oder mindestens eine Unterdruckeinrichtung zum Erzeugen eines vorgegebenen Unterdrucks in dem zu prüfenden Bauteil. Die Druckeinrichtung umfasst insbesondere eine Pumpe, vorzugsweise eine Hydraulikpumpe, mit der ein Prüffluid, insbesondere eine Prüfflüssigkeit, wie Prüfwasser, in das gegebenenfalls einseitig verschlossene Bauteil gepumpt werden kann. Der einseitige Verschluss des Bauteils kann in an sich bekannter Weise zum Beispiel über ein Verschlusselement des Bauteils erfolgen, gegebenenfalls nach einer Entlüftung bzw. Vorflutung. Durch Einpumpen des Prüffluids mit der Pumpe wird in dem Bauteil der vorgegebene Prüfdruck erzeugt und das Bauteil so in der vorgeschriebenen Weise auf Druckbeständigkeit und Dichtigkeit geprüft. Ein Prüfdruck ist zum Beispiel denkbar in einer Höhe von mehr als 10 bar, vorzugsweise mehr als 20 bar.

Die Unterdruckeinrichtung umfasst ebenfalls eine Pumpe, vorzugsweise eine Hydraulikpumpe, insbesondere eine Vakuumpumpe, mit der in dem zu prüfenden Bauteil ein vorgegebener Unterdruck, also ein geringerer Druck als Umgebungsdruck, erzeugt werden kann. Wiederum kann das Bauteil für den Prüfvorgang in an sich bekannter Weise einseitig verschlossen werden, zum Beispiel mit einem Verschlusselement, wie einer Blindkupplung, oder einer Sichtscheibe für eine Sichtprüfung des Inneren des Bauteils. Durch Abpumpen der in dem Bauteil enthaltenen Luft wird in dem Bauteil ein vorgegebener Unterdruck erzeugt und so eine Saugprüfung zum Beispiel eines Saugschlauchs durchgeführt. Sobald in dem Bauteil der vorgegebene Unterdruck erreicht ist, kann zum Beispiel eine Sichtprüfung der inneren Beschaffenheit des Bauteils, zum Beispiel eines Saugschlauchs, durchgeführt werden.

Erfindungsgemäß umfasst die Prüfeinrichtung weiterhin eine Steuereinrichtung, die dazu ausgebildet ist, einen Prüfvorgang des mindestens einen zu prüfenden Bauteils nach Vorgabe einer Bedienperson durchzuführen. Die Steuereinrichtung umfasst eine Steuersoftware und Schnittstellen zu der Druckeinrichtung und/oder der Unterdruckeinrichtung sowie gegebenenfalls vorgesehenen Ventilen, wie Steuerventilen, insbesondere Absperrventilen. Die Steuereinrichtung kann zum Beispiel eine SPS-Steuereinrichtung (Speicherprogrammierbare Steuereinrichtung) sein. Sie umfasst vorzugsweise weiterhin eine Bedienschnittstelle, über die eine Bedienperson einen Prüfvorgang starten kann. Als Bedienschnittstelle kann zum Beispiel ein Touchscreen zum Einsatz kommen. Denkbar sind aber auch konventionelle Bedienknöpfe oder Schalter.

Die Steuereinrichtung steuert die Druckeinrichtung und/oder die Unterdruckeinrichtung sowie gegebenenfalls vorgesehene Ventile derart an, dass der durch die Bedienperson gewünschte Prüfvorgang durchgeführt wird. Das Durchführen des Prüfvorgangs kann zwischenzeitliche weitere Bedieneingaben der Bedienperson erfordern bzw. umfassen. Zum Beispiel kann die Bedienperson durch die Steuereinrichtung durch den Prüfvorgang geführt werden, zum Beispiel indem die Steuereinrichtung der Bedienperson die jeweils erforderlichen Bedieneingaben für den nächsten Schritt des Prüfvorgangs vorgibt. Denkbar ist aber auch ein vollautomatischer Prüfvorgang durch die Steuereinrichtung nach Auslösen durch eine Bedienperson als Bedienervorgabe. Die Steuereinrichtung kann auch eine Regeleinrichtung umfassen bzw. als kombinierte Steuer- und Regeleinrichtung ausgebildet sein. Zum Beispiel kann die Steuer- und Regeleinrichtung auf Grundlage von Messwerten von Messeinrichtungen der Prüfeinrichtung, zum Beispiel Druckmesseinrichtungen der Druckeinrichtung und/oder der Unterdruckeinrichtung, Steuerventile so ansteuern, dass ein vorgegebener Prüfdruck oder Unterdruck für einen vorgegebenen Zeitraum aufrechterhalten bleibt.

Durch das erfindungsgemäße Vorsehen einer Steuereinrichtung und der damit verbundenen zumindest teilweisen Automatisierung des Prüfvorgangs werden die zum Stand der Technik erläuterten Nachteile überwunden. Insbesondere wird die Anzahl erforderlicher manueller Schritte durch eine Bedienperson reduziert. Der entsprechende Aufwand und die Fehleranfälligkeit werden entsprechend verringert. Auch die Bediensicherheit wird erhöht, insbesondere wenn die Steuereinrichtung den Prüfvorgang automatisch durchführt oder der Bedienperson die erforderlichen Schritte des Prüfvorgangs bediensicher vorgibt. Die Steuereinrichtung ist ein konsequentes Einmannsystem, das entsprechend durch eine Bedienperson bedient werden kann. Eine Anzeige- und Bedieneinrichtung der Steuereinrichtung kann zum Beispiel einen Touchscreen umfassen und der Bedienperson die relevanten Informationen über einen laufenden Prüfvorgang anzeigen. Ein Standardbetriebssystem, wie ein Windows-System, kann zum Einsatz kommen. Durch die Steuereinrichtung wird eine klare und logische Führung sowie ein Minimum von Anforderungen an die Bedienperson erreicht. Das Potenzial von Fehlern und Störungen wird verringert. Durch eine interaktive Programmsteuerung als integraler Bestandteil der Steuereinrichtung werden die Benutzerfreundlichkeit und Ergonomie und gleichzeitig die Sicherheit verbessert und die Effizienz erhöht.

Durch die erfindungsgemäße Prüfeinrichtung wird es insbesondere Feuerwehren ermöglicht, ortsunabhängig und direkt am Feuerwehrfahrzeug in einfacher und sicherer Weise die Bestückung des Fahrzeugs zu prüfen, vorzugsweise in einem Arbeitsgang. Das Vorhalten einer Prüfwerkstatt oder das Aufsuchen einer externen Prüfwerkstatt in einer Prüfhalle kann entfallen, da die für den Prüfvorgang benötigten Komponenten in der erfindungsgemäßen Prüfeinrichtung vereint werden können, wie nachfolgend noch näher erläutert wird. Je nach Ausstattung der Prüfeinrichtung, die nachfolgend dargestellt wird, lassen sich nahezu sämtliche wasserführenden Armaturen und Schläuche gemäß den aktuell geltenden Normen automatisiert oder automatisch prüfen.

Nach einer Ausgestaltung kann vorgesehen sein, dass die Druckeinrichtung und/oder die Unterdruckeinrichtung mindestens ein Steuerventil und mindestens eine Druckmesseinrichtung umfasst, und dass die Steuereinrichtung dazu ausgebildet ist, den Prüfvorgang durch Ansteuern des mindestens einen Steuerventils durchzuführen, insbesondere auf Grundlage von Messwerten der mindestens einen Druckmesseinrichtung.

Bei dem mindestens einen Steuerventil kann es sich insbesondere um mindestens ein Absperrventil handeln. Es kann sich aber beispielsweise auch um ein steuerbares Proportionalventil handeln. Diese möglichen Ausgestaltungen eines Steuerventils gelten im gesamten Kontext dieser Patentanmeldung. Als Druckmesseinrichtungen kommen zum Beispiel Manometer infrage. Sowohl die Druckeinrichtung als auch die Unterdruckeinrichtung können jeweils ein oder mehrere Steuerventile umfassen. Durch Ansteuern dieser Ventile, zum Beispiel durch Öffnen und Schließen von Absperrventilen, können die Fluidströme in der für den jeweiligen Prüfvorgang erforderlichen Weise gesteuert werden. Das Durchführen des Prüfvorgangs umfasst also insbesondere das Ansteuern der Steuerventile der Druckeinrichtung und/oder der Unterdruckeinrichtung, zum Beispiel ein wahlweises Öffnen und Schließen von Absperrventilen. Auch kann die Steuereinrichtung auf Grundlage von Messwerten von Druckmesseinrichtungen den Prüfvorgang durchführen, zum Beispiel bei Erreichen des vorgegebenen Prüfdrucks oder Unterdrucks diesen für einen vorgegebenen Zeitpunkt in Form einer Regelung halten und danach zum Beenden des Prüfvorgangs wieder auf den Normaldruck zurückfallen lassen.

Wie bereits erwähnt, kann die Steuereinrichtung eine Anzeigeeinrichtung bzw. eine Anzeige- und Bedieneinrichtung umfassen und dazu ausgebildet sein, einer Bedienperson visuell für den Prüfvorgang durchzuführende Schritte anzuzeigen. Wie ebenfalls bereits erläutert, ist es auch möglich, dass die Steuereinrichtung dazu ausgebildet ist, den Prüfvorgang nach einer Starteingabe als Vorgabe durch eine Bedienperson automatisch durchzuführen, insbesondere vollautomatisch. Durch die vorgenannten Ausgestaltungen wird das Durchführen des Prüfvorgangs weiter vereinfacht und die Bediensicherheit erhöht.

Gemäß einer weiteren Ausgestaltung kann vorgesehen sein, dass die Prüfeinrichtung mindestens zwei Prüfanschlüsse zum gleichzeitigen Anschließen von mindestens zwei zu prüfenden Bauteilen umfasst, dass die mindestens eine Druckeinrichtung und/oder die mindestens eine Unterdruckeinrichtung mit den mindestens zwei Prüfanschlüssen gleichzeitig oder einzeln verbindbar ist, und dass die Steuereinrichtung dazu ausgebildet ist, einen Prüfvorgang von mindestens zwei gleichzeitig an den mindestens zwei Prüfanschlüssen angeschlossenen zu prüfenden Bauteilen oder von einem an einem der mindestens zwei Prüfanschlüsse angeschlossenen zu prüfenden Bauteil durchzuführen. Die mindestens eine Druckeinrichtung und/oder die mindestens eine Unterdruckeinrichtung können über mindestens ein durch die Steuereinrichtung ansteuerbares Steuerventil wahlweise mit einem der mindestens zwei Prüfanschlüsse oder mit mindestens zwei der mindestens zwei Prüfanschlüssen, beispielsweise mit sämtlichen der Prüfanschlüssen, verbindbar sein.

Mit der vorgenannten Ausgestaltung ist eine zeitgleiche Druckprüfung mehrerer an die Prüfeinrichtung angeschlossener Bauteile möglich. Dazu können insbesondere mehr als zwei Prüfanschlüsse vorgesehen sein, zum Beispiel vier Prüfanschlüsse oder sechs Prüfanschlüsse.

Durch die parallele Druckprüfung mehrerer Bauteile, zum Beispiel mehrere Armaturen und/oder Standrohre, wird die Prüfung von Bauteilen weiter vereinfacht und ist insbesondere schneller möglich. Ein aufwendiges Umkuppeln zwischen unterschiedlichen Bauteilen kann entfallen. Beispielsweise durch eine individuelle Ansteuerbarkeit der Prüfanschlüsse ist es jedoch auch möglich, einen Prüfvorgang durchzuführen, wenn nicht sämtliche Prüfanschlüsse mit entsprechenden Bauteilen verbunden sind. So ist es beispielsweise auch bei Vorhandensein mehrerer Prüfanschlüsse möglich, nur ein Bauteil zur Zeit zu prüfen, wenn nur ein Bauteil mit einem Prüfanschluss verbunden ist.

Nach einer weiteren Ausgestaltung kann vorgesehen sein, dass die mindestens eine Unterdruckeinrichtung und die mindestens eine Druckeinrichtung wahlweise mit dem mindestens einen Prüfanschluss verbindbar sind, so dass in dem mindestens einen an den mindestens einen Prüfanschluss angeschlossenen zu prüfenden Bauteil ohne Lösen von dem mindestens einen Prüfanschluss nacheinander ein vorgegebener Unterdruck durch die Unterdruckeinrichtung und ein vorgegebener Prüfdruck durch die Druckeinrichtung erzeugt werden kann.

Die mindestens eine Unterdruckeinrichtung und die mindestens eine Druckeinrichtung können über mindestens ein durch die Steuereinrichtung ansteuerbares Steuerventil wahlweise mit dem mindestens einen Prüfanschluss verbindbar sein. Durch die vorgenannte Ausgestaltung ist eine kombinierte Saug- und Druckprüfung an demselben Prüfanschluss möglich, indem nacheinander zum Beispiel ein vorgegebener Unterdruck und ein vorgegebener Prüfdruck in dem Bauteil erzeugt werden. Dazu können die Unterdruckeinrichtung und die Druckeinrichtung alternativ mit dem mindestens einen Prüfanschluss verbindbar sein, insbesondere indem entsprechende Steuerventile, zum Beispiel Absperrventile, geöffnet oder geschlossen werden. Das im Stand der Technik erforderliche aufwendige Umkuppeln zwischen einer Saugprüfung an einem ersten Prüfanschluss und einer Druckprüfung an einem zweiten Prüfanschluss kann entfallen. Neben einer Verringerung des Aufwands wird hiermit eine weitere Fehlerquelle eliminiert und der Prüfvorgang beschleunigt.

Die Prüfeinrichtung kann weiterhin ein auf ein dem Prüfanschluss abgewandtes Ende des zu prüfenden Bauteils aufsetzbares Sichtfenster umfassen, durch das während eines Prüfvorgangs die innere Beschaffenheit des zu prüfenden Bauteils geprüft werden kann. Das Sichtfenster kann ein Sichtglas umfassen. Es sind aber auch andere transparente Materialien für das Sichtfenster möglich, zum Beispiel transparente Kunststoffe. Durch das Sichtfenster kann eine Sichtprüfung des Inneren des Bauteils erfolgen, insbesondere während einer Saugprüfung, also beim Erzeugen eines Unterdrucks in dem Bauteil.

Nach einer weiteren diesbezüglichen Ausgestaltung kann dem Sichtfenster eine Kamera zugeordnet sein, die das Innere des zu prüfenden Bauteils aufnimmt, wobei das Kamerabild auf einer Anzeigeeinrichtung bzw. einer Anzeige- und Bedieneinrichtung zum Beispiel der Steuereinrichtung oder einer der Kamera zugeordneten Anzeigeeinrichtung, zum Beispiel einem Smartphone, Tablet, Laptop etc., angezeigt wird. Die Kamera kann dabei an dem Sichtfenster angeordnet sein, zum Beispiel an einer Innen- oder Außenseite des Sichtfensters angebaut sein oder auch in das Sichtfenster integriert sein. Auch wäre eine von dem Sichtfenster separate Anordnung bzw. Positionierung der Kamera möglich, beispielsweise außen vor dem Sichtfenster. Mit einer solchen Kamera und Anzeige auf einer Anzeigeeinrichtung, zum Beispiel einem Touchscreen der Steuereinrichtung, wird eine Sichtprüfung an einem von dem Bauteil entfernten Ort ermöglicht. Die Sichtprüfung wird dadurch sicherer und komfortabler. Auch eine lückenlose Dokumentation der Sichtprüfung ist hierdurch möglich, ebenso wie eine automatisierte Auswertung der Kamerabilder. Dem Sichtfenster kann nach einer weiteren Ausgestaltung eine Lichtquelle zugeordnet sein. Auch die Lichtquelle kann an dem Sichtfenster angeordnet sein, zum Beispiel an einer Innen- oder Außenseite des Sichtfensters angebaut sein oder auch in das Sichtfenster integriert sein. Auch wäre wiederum eine von dem Sichtfenster separate Anordnung bzw. Positionierung der Lichtquelle möglich, beispielsweise außen vor dem Sichtfenster. Die Lichtquelle verbessert die Möglichkeiten der Sichtprüfung im Inneren des Bauteils.

Die Prüfeinrichtung kann weiterhin mindestens einen Entlüftungsanschluss aufweisen, durch den beim Erzeugen des vorgegebenen Prüfdrucks und/oder beim Erzeugen des vorgegebenen Unterdrucks eine Entlüftung des mindestens einen zu prüfenden Bauteils erfolgt. Eine Entlüftung ist regelmäßig erforderlich, um den vorgegebenen Prüfdruck oder Unterdruck aufbauen zu können. Dies kann in besonders einfacher Weise über einen solchen Entlüftungsanschluss erfolgen. Auch dieser kann ein Steuerventil umfassen, das von der Steuereinrichtung zum Entlüften ansteuerbar ist. Es kann aber natürlich auch eine rein mechanische Steuerung des Entlüftungsanschlusses erfolgen.

Grundsätzlich ist anzumerken, dass beispielsweise für die Druckprüfung während des Entlüftens zunächst ein Vorfluten des Inneren des Bauteils mittels eines Prüffluids, zum Beispiel einer Prüfflüssigkeit, wie Prüfwasser, erfolgt und anschließend unter einem höheren Druck weiteres Prüffluid in das Innere des Bauteils eingeleitet wird. Auch diese erste Druckstufe zum Befüllen des Bauteils im Zuge der Entlüftung kann durch ein geeignetes Steuerventil erfolgen, angesteuert wiederum durch die Steuereinrichtung.

Die Prüfeinrichtung umfasst weiterhin ein Schutzgehäuse, in dem sich der mindestens eine Prüfanschluss und das mindestens eine zu prüfende Bauteil während des Prüfvorgangs befinden, wobei das Schutzgehäuse mindestens eine Zugangstür aufweist, die einen Schließsensor aufweist, wobei ein Start des Prüfvorgangs nur möglich ist, wenn der Schließsensor einen geschlossenen Zustand der mindestens einen Zugangstür signalisiert. Auch die Druckeinrichtung und/oder die Unterdruckeinrichtung können innerhalb des Schutzgehäuses angeordnet sein. Sie könnten aber auch außerhalb des Schutzgehäuses angeordnet sein, zum Beispiel in einem weiteren Gehäuseteil neben dem Schutzgehäuse. Die Steuereinrichtung einschließlich einer gegebenenfalls vorgesehenen Anzeige- und/oder Bedieneinrichtung kann innerhalb des Schutzgehäuses, innerhalb eines weiteren Gehäuseteils oder auch separat von beiden ausgebildet sein. Denkbar wäre zum Beispiel auch, die Steuereinrichtung in einem getrennten Gerät auszubilden, zum Beispiel einem Computer, einem Laptop, einem Tablet oder einem Smartphone. Das Schutzgehäuse mit der sensorüberwachten Zugangstür erhöht die Bediensicherheit weiter. So ist einerseits eine sich in der Nähe aufhaltende Bedienperson während eines Prüfvorgangs durch das Schutzgehäuse sicher geschützt, zum Beispiel bei einem Versagen des Bauteils bei einer Druckprüfung. Gleichzeitig ist sichergestellt, dass der Prüfvorgang nicht versehentlich bei noch geöffnetem Schutzgehäuse gestartet werden kann. Das Schutzgehäuse kann weiterhin mindestens ein vorzugsweise hochschlagfestes Sichtfenster aufweisen, zum Beispiel ein Makrolon-Sichtfenster. Durch dieses ist eine visuelle Überwachung des Prüfvorgangs möglich ohne die Bediensicherheit zu beeinträchtigen. Das Schutzgehäuse kann zum Beispiel ein Grundgestell aus einer Quadratrohrkonstruktion aufweisen, zum Beispiel aus Edelstahl. Die Zugangstür kann auch automatisch öffnen und schließen, insbesondere kann diese nach einer Bedienvorgabe zum Start des Prüfvorgangs automatisch schließen und nach Abschluss des Prüfprogramms automatisch öffnen. Durch Einsatz von Edelstahl wird auch zum Beispiel bei Schaummitteleinsatz ein optimaler Korrosionsschutz erreicht.

Die Prüfeinrichtung kann nach einer weiteren Ausgestaltung fahrbar auf mehreren Rollen gelagert sein. Insbesondere kann ein Gehäuse, gegebenenfalls einschließlich eines Schutzgehäuses, der Prüfeinrichtung fahrbar auf den Rollen gelagert sein. Dadurch wird die Mobilität der Prüfeinrichtung weiter verbessert, indem sie problemlos zu dem jeweiligen Prüfort, zum Beispiel einem Feuerwehrfahrzeug, gefahren werden kann. Das Fahren der Prüfeinrichtung kann zum Beispiel manuell erfolgen. Es wäre aber auch ein entsprechender Antrieb denkbar. Als Rollen kommen zum Beispiel Bock- und Lenkrollen mit Feststellbremsen für höchste Arbeitsergonomie in Frage. Dadurch wird eine problemlose Manövrierfähigkeit sichergestellt.

Um den mobilen Einsatz der Prüfeinrichtung weiter zu optimieren, kann sie eine Batterie zum Bereitstellen der elektrischen Energie für die Steuereinrichtung und den Prüfvorgang, insbesondere das Ansteuern der Steuerventile und den Betrieb der Druckeinrichtung und/oder der Unterdruckeinrichtung, einschließlich beispielsweise entsprechender Pumpen, aufweisen. Natürlich wäre aber auch eine kabelgebundene Versorgung mit elektrischer Energie möglich. Als Batterien kommen insbesondere wiederaufladbare Akkus infrage. Diese können zum Beispiel in einem Bodenbereich des vorzugsweise mit entsprechenden Rollen versehenen (Schutz-)Gehäuses angeordnet sein. Hierdurch wird der Schwerpunkt abgesenkt und eine hohe Stand- und Kippsicherheit erreicht. Dies kann weiter verstärkt werden zum Beispiel durch Vorsehen entsprechender Gewichte, zum Beispiel von Metallelementen im unteren Gehäusebereich.

Nach einer weiteren Ausgestaltung kann die Prüfeinrichtung eine Recyclingeinrichtung umfassen, die dazu ausgebildet ist, im Zuge eines Prüfvorgangs verwendete Prüfflüssigkeit, insbesondere Prüfwasser, nach dem Prüfvorgang aufzufangen und für eine Wiederverwendung in einem weiteren Prüfvorgang bereitzustellen. Auf diese Weise wird eine besonders nachhaltige und ressourcenschonende Ausgestaltung der Prüfeinrichtung realisiert. Außerdem verbessert es die mobile Verwendbarkeit in geschlossenen Räumen, gegebenenfalls ohne zusätzliche Wasserversorgung.

Die Steuereinrichtung kann weiterhin eine bidirektionale Datenschnittstelle aufweisen, über die sie mit einer externen Prüfdatenbank verbunden ist und/oder über die ein Fernzugriff auf die Steuereinrichtung möglich ist. Hierdurch wird eine besonders vorteilhafte Digitalisierung und Vernetzung der Prüfeinrichtung zum Beispiel mit einer externen Datenverwaltungssoftware ermöglicht. Über die Datenschnittstelle können alle notwendigen bzw. dokumentationspflichtigen Informationen, wie Bedienperson als Prüfer, Prüfzeit, angelegte Drücke und Unterdrücke, Prüfdatum etc. nach Abschluss eines Prüfvorgangs automatisch an die Prüfdatenbank übertragen werden. Die Dokumentation des Prüfvorgangs wird so optimiert. Wenn vor einem Prüfvorgang eine Identifikation zum Beispiel durch Scannen eines Datenträgers (z.B. Barcode) erfolgt, können in der Datenverwaltungssoftware hinterlegte Prüfdaten auch zu der Steuereinrichtung übertragen und von dieser verarbeitet bzw. verwendet werden. Hierdurch wird ein Arbeitsprozess gestartet, sodass der Bediener durch die Prüfung geführt wird und er lediglich Arbeitsschritte bestätigen muss. Durch das Bereitstellen eines Fernzugriffs auf die Steuereinrichtung ist im Übrigen ein digitaler Support möglich, insbesondere das Durchführen von Updates oder eine Wartung bei etwaigen Störungen. Die Datenübertragung kann kabelgebunden oder kabellos erfolgen. Vorzugsweise erfolgt die Datenübertragung über das Internet.

Insgesamt wird durch die erfindungsgemäße Prüfeinrichtung somit eine automatisierte, vorzugsweise automatische Prüfung einer Vielzahl unterschiedlicher Bauteile ermöglicht, vorzugsweise gleichzeitig. Die Bediensicherheit und der Komfort werden erhöht und der mit einem Prüfvorgang verbundene Aufwand sowohl für die Bedienperson als auch in zeitlicher Hinsicht, werden minimiert.

Grundsätzlich sind dabei beliebige Kombinationen von Prüfanschlüssen denkbar. Lediglich beispielhaft und nicht einschränkend werden die folgenden Möglichkeiten für Prüfanschlüsse genannt:
- 4x A-Storzanschluss zur Prüfung von Saugschläuchen (Druck und Unterdruck). Sämtliche Anschlüsse können auch einzeln verwendet werden, eine Vollbelegung ist nicht zwingend notwendig.
- 1x Unterflurhydrantenanschluss DN 80 zur Prüfung von Standrohren
- 4x C-Storzanschluss zur gleichzeitigen Prüfung von sämtlichen wasserführenden Armaturen wie Strahlrohre, etc. Sämtliche Anschlüsse können auch einzeln verwendet werden, eine Vollbelegung ist nicht zwingend notwendig.
- 2x B-Storzanschluss zur gleichzeitigen Prüfung von sämtlichen wasserführenden Armaturen wie Strahlrohren, etc. Sämtliche Anschlüsse können auch einzeln verwendet werden, eine Vollbelegung ist nicht zwingend notwendig.
- 1x Luftdruckanschluss zur Prüfung von z.B. Systemtrennern.

Ausführungsbeispiele der Erfindung werden nachfolgend näher erläutert. Es zeigen schematisch:
- Figur 1:: eine erfindungsgemäße Prüfeinrichtung nach einem ersten Ausführungsbeispiel in Form eines Hydraulikschaltbilds,
- Figur 2: eine erfindungsgemäße Prüfeinrichtung nach einem zweiten Ausführungsbeispiel in Form eines Hydraulikschaltbilds, und
- Figur 3: eine schematische Ansicht einer erfindungsgemäßen Prüfeinrichtung mit Schutzgehäuse.

Soweit nichts anders angegeben ist, bezeichnen in den Figuren gleiche Bezugszeichen gleiche Gegenstände.

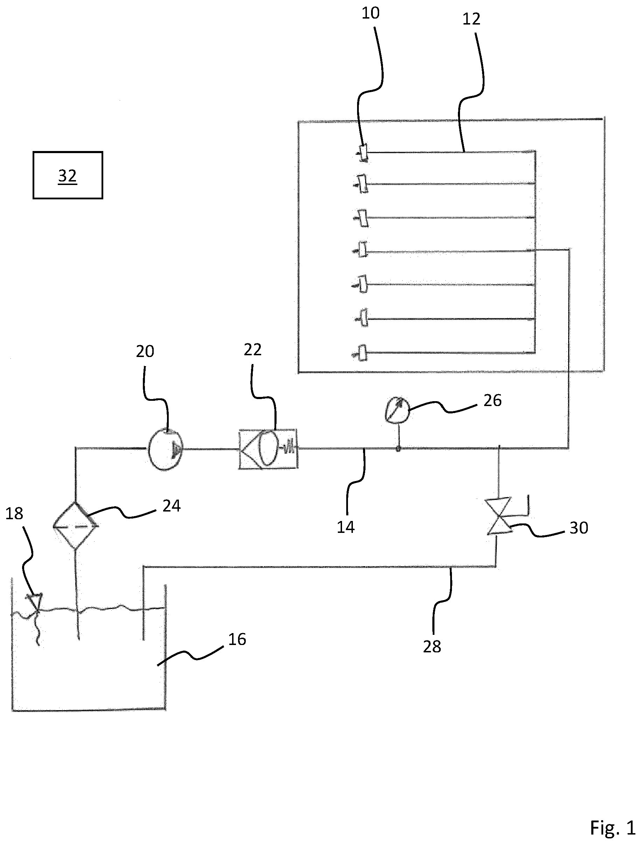

In Figur 1 ist eine Prüfeinrichtung zum Prüfen von fluidführenden Bauteilen, insbesondere fluidführenden Armaturen und/oder fluidführenden Schläuchen, beispielsweise wasserführenden Armaturen und/oder wasserführenden Schläuchen, dargestellt. Die Prüfeinrichtung umfasst in dem dargestellten Beispiel sieben Prüfanschlüsse 10, an die parallel bis zu sieben zu prüfende Bauteilen angeschlossen werden können. Die Prüfanschlüsse 10 können zum Beispiel jeweils eine Storz-Kupplung umfassen. Über Fluidleitungen 12, 14 sind die Prüfanschlüsse 10 mit einem Flüssigkeitsreservoir 16, vorliegend einem Wasserreservoir 16, als Prüfflüssigkeit verbunden. Der Füllstand des Flüssigkeitsreservoirs 16 kann über eine Füllstandsmesseinrichtung 18 gemessen werden. Über eine Hydraulikpumpe 20 und ein Rückschlagventil 22 kann Flüssigkeit aus dem Flüssigkeitsreservoir 16 über einen Filter 24 zu den Prüfanschlüssen 10 und damit für eine Druckprüfung in das Innere der angeschlossenen zu prüfenden Bauteile gepumpt werden. Eine Druckmesseinrichtung 26 misst den dabei anliegenden Druck.

Über eine weitere Fluidleitung 28 kann von den Prüfanschlüssen 10 zurückkommende Prüfflüssigkeit nach Abschluss des Prüfvorgangs wieder dem Flüssigkeitsreservoir 16 zugeführt werden für einen nachfolgenden Prüfvorgang. In der Fluidleitung 28 befindet sich ein Steuerventil 30, vorliegend ein Absperrventil 30, das während des Pumpens der Prüfflüssigkeit zu den Prüfanschlüssen 10 die Verbindung zu dem Flüssigkeitsreservoir 16 über die Fluidleitung 28 sperrt. Nach Abschluss des Prüfvorgangs wird das Absperrventil 30 geöffnet, so dass die Flüssigkeit über die Fluidleitung 28 in das Flüssigkeitsreservoir 16 zurückfließen kann.

Die Prüfeinrichtung umfasst weiterhin eine Steuereinrichtung 32, vorzugsweise eine Steuer- und Regeleinrichtung 32. Diese ist über nicht näher dargestellte Leitungen mit den Komponenten der Prüfeinrichtung verbunden, insbesondere der Hydraulikpumpe 20, der Füllstandsmesseinrichtung 18, der Druckmesseinrichtung 26, sowie dem Absperrventil 30. Die Steuereinrichtung 32 umfasst eine Anzeige- und Bedieneinrichtung, als Schnittstelle zu einer einen Prüfvorgang auslösenden Bedienperson. So kann eine Bedienperson nach Anschließen eines oder mehrerer Bauteile an die Prüfanschlüsse 10 über die Anzeige- und Bedieneinrichtung einen Prüfvorgang, zum Beispiel eine Druckprüfung, durch Eingabe einer entsprechenden Vorgabe starten. Hierzu wird regelmäßig das den Prüfanschlüssen 10 abgewandte Ende der Bauteile verschlossen. In der Regel verfügen wasserführende Armaturen über in diese verbaute Kugelhähne oder Niederschraubventile o.ä. Verschlusselemente, deren Dichtigkeit und Funktionsfähigkeit geprüft werden soll. Entsprechend kann zum Beispiel nur der Körper der Armatur entlüftet werden und das Verschlusselement der Armatur geschlossen werden, zum Beispiel händisch zugeschraubt werden, um bei der eigentlichen Druckprüfung die Funktionstüchtigkeit feststellen zu können. Zu Beginn der Druckprüfung wird das Bauteil mit Prüfflüssigkeit durch Ansteuern der Hydraulikpumpe 20 vorgefüllt und die darin befindliche und verdrängte Luft über einen nicht näher dargestellten Entlüftungsanschluss entlüftet. Anschließend wird über die Hydraulikpumpe 20 der vorgegebene Prüfdruck in dem oder den Bauteilen erzeugt, der über die Druckmesseinrichtung 26 überwacht werden kann. Nach Abschluss des Prüfvorgangs wird das Absperrventil 30 geöffnet und der Druck durch Abfließen der Prüfflüssigkeit in dem Bauteil wieder abgebaut. Zu prüfende Bauteile können an sämtliche oder nur einzelne oder nur einen der Prüfanschlüsse 10 angeschlossen werden. Der Prüfvorgang kann dann entsprechend für sämtliche, einige oder nur ein Bauteil durchgeführt werden.

Dieser Prüfvorgang kann durch die Steuereinrichtung 32 automatisch durchgeführt werden einschließlich des Ansteuerns der Hydraulikpumpe 20 und des Absperrventils 30 sowie des Auswertens der Messergebnisse insbesondere der Druckmesseinrichtung 26. Die gesamte Prüfeinrichtung kann dabei innerhalb eines Gehäuses angeordnet sein, das über Rollen fahrbar ausgestaltet ist. Das Gehäuse kann insbesondere ein Schutzgehäuse mit sensorüberwachten Gehäusetüren und gegebenenfalls hochschlagfeste Sichtfenster umfassen. Der Prüfvorgang kann durch die Steuereinrichtung 32 vollständig dokumentiert werden. Über eine bidirektionale Datenschnittstelle kann die Dokumentation des Prüfvorgangs zum Beispiel an eine externe Prüfdatenbank übermittelt werden.

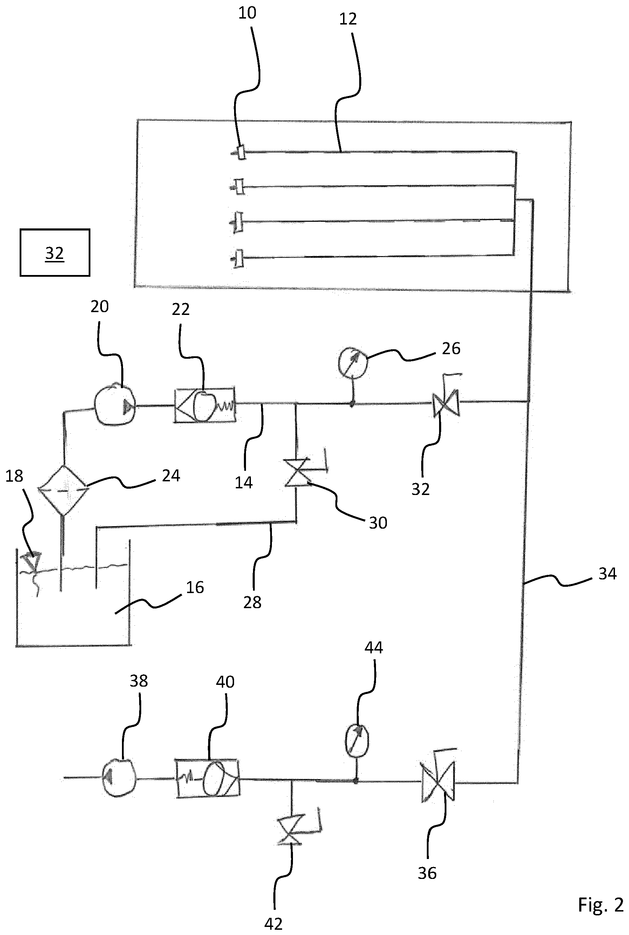

Figur 2 zeigt ein weiteres Ausführungsbeispiel einer erfindungsgemäßen Prüfeinrichtung, wobei die Ausführungsbeispiele nach den Figuren 1 und 2 auch kombiniert werden können derart, dass beide Ausführungsbeispiele in einer Prüfeinrichtung realisiert sind. Die Steuereinrichtung nach Figur 2 umfasst in dem dargestellten Beispiel vier Prüfanschlüsse 10, die wiederum über Fluidleitungen 12 und 14 mit einem Flüssigkeitsreservoir 16 verbunden sind. In der Fluidleitung 14 sind wie bei dem Ausführungsbeispiel nach Figur 1 in Strömungsrichtung ein Filter 24, eine Hydraulikpumpe 20, ein Rückschlagventil 22 und eine Druckmesseinrichtung 26 zur Druckprobe angeordnet. Weiterhin ist wiederum eine weitere Fluidleitung 28 zum Rückführen von Prüfflüssigkeit in das Flüssigkeitsreservoir 16 vorgesehen, in der sich wiederum ein Absperrventils 30 befindet. Über diesen Teil der Prüfeinrichtung nach Figur 2 kann eine Druckprüfung von an die Prüfanschlüsse 10 angeschlossenen Bauteilen erfolgen, wie dies zu Figur 1 erläutert wurde. Wiederum können zu prüfende Bauteile an sämtliche oder nur einzelne oder nur einen der Prüfanschlüsse 10 angeschlossen werden. Der Prüfvorgang kann dann entsprechend für sämtliche, einige oder nur ein Bauteil durchgeführt werden.

Zusätzlich zu der Ausgestaltung, wie sie nach Figur 1 vorgesehen ist, ist bei der Prüfeinrichtung nach Figur 2 ein weiteres Absperrventil 32 in der Leitung 14 angeordnet, durch welches die die Hydraulikpumpe 20 umfassende Druckeinrichtung wahlweise mit den Prüfanschlüssen 10 verbunden oder von diesen getrennt werden kann. In einer weiteren Hydraulikleitung 34 ist ein weiteres Absperrventil 36 angeordnet, über das die Prüfanschlüsse 10 wahlweise mit einer eine Hydraulikpumpe 38, insbesondere eine Vakuumpumpe 38, umfassenden Unterdruckeinrichtung verbunden oder von dieser getrennt werden können. Zwischen dem Absperrventil 36 und der Hydraulikpumpe 38 befinden sich weiterhin ein Rückschlagventil 40, ein automatisch betätigtes Ventil 42, um einen Unterdruck innerhalb der Saugschläuche zur Atmosphäre auszugleichen, sowie eine weitere Druckmesseinrichtung 44 zur Unterdruckprobe. Natürlich könnten die Druckmesseinrichtungen 26 und 44 auch durch eine kombinierte Druckmesseinrichtung gebildet sein.

Zusätzlich zu dem zu Figur 1 erläuterten Vorgang kann vor oder nach der Druckprüfung bei abgesperrtem Absperrventil 32 und geöffnetem Absperrventil 36 wiederum durch die Steuereinrichtung 32 gesteuert eine Saugprüfung der an die Prüfanschlüsse 10 angeschlossenen Bauteile mittels der Unterdruckeinrichtung umfassend die Hydraulikpumpe 38 erfolgen. So kann durch die Hydraulikpumpe 38 in den Bauteilen befindliche Luft abgepumpt werden und dadurch ein vorgegebener Unterdruck in den Bauteilen erzeugt werden. Wiederum können die Bauteile hierzu an ihrem dem jeweiligen Prüfanschluss 10 abgewandten Ende einseitig verschlossen werden, zum Beispiel mit einem Sichtfenster, durch das während des Prüfvorgangs die innere Beschaffenheit des zu prüfenden Bauteils geprüft werden kann. Die Druckmesseinrichtung 44 misst dabei den anliegenden Unterdruck. Wiederum ist die Steuereinrichtung 32 mit sämtlichen Komponenten der in Figur 2 gezeigten Steuereinrichtung verbunden, so dass sie insbesondere die Hydraulikpumpen 20 und 38 ansteuern kann, die Absperrventile 30, 32, 36 und 42 öffnen und schließen kann, sowie die Messergebnisse der Druckmesseinrichtungen 26 und 44 auslesen kann. Wie zu Figur 1 erläutert, kann durch die Steuereinrichtung 32 anschließend bei geschlossenem Absperrventil 36 und geöffnetem Absperrventil 32 eine Druckprüfung von an die Prüfanschlüsse 10 angeschlossenen Bauteilen erfolgen, umfassend insbesondere das Erzeugen eines vorgegebenen Prüfdrucks.

Während mit der Prüfeinrichtung nach Figur 1 also eine gleichzeitige Druckprüfung einer Mehrzahl von Bauteilen möglich ist, ist mit der Prüfeinrichtung gemäß Figur 2 eine Saug- und Druckprüfung von Bauteilen über denselben Prüfanschluss 10, also ohne erforderliches Umkuppeln der Bauteile zwischen der Saug- und Druckprüfung, möglich. Wie bereits erläutert, können die Komponenten der Prüfeinrichtungen nach den Figuren 1 und 2 auch kombiniert werden.

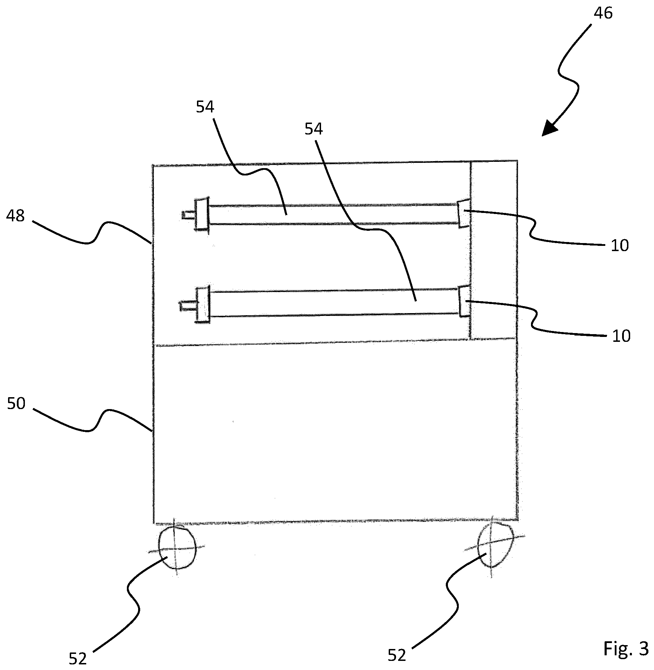

Figur 3 zeigt ein Schutzgehäuse 46 einer erfindungsgemäßen Prüfeinrichtung. Das Schutzgehäuse umfasst einen oberen Gehäuseteil 48, in welchem in dem gezeigten Bespiel zwei Prüfanschlüsse 10 zu erkennen sind, an denen zwei Saugschläuche 54 angeschlossen sind. Ein unterer Gehäuseteil 50 ist auf Rollen 52 gelagert, so dass die Prüfeinrichtung mit ihrem Schutzgehäuse 46 fahrbar ist. Der obere Gehäuseteil 48 kann mindestens eine Zugangstür aufweisen, die einen Schließsensor aufweist, wobei ein Start des Prüfvorgangs nur möglich ist, wenn der Schließsensor einen geschlossenen Zustand der mindestens einen Zugangstür signalisiert. Außerdem kann der obere Gehäuseteil 48 mindestens ein hochschlagfestes Sichtfenster umfassen, durch das die Saugschläuche 54 von außen sichtbar sind. In dem unteren Gehäuseteil 50 können sich zum Beispiel eine Batterie zur elektrischen Versorgung sowie die Steuereinrichtung 32 befinden. Auch Pumpen und Ventile können sich im unteren Gehäuseteil 50 befinden.

### BEZUGSZEICHENLISTE

| | | | |
|---|---|---|---|
| 10 | Prüfanschlüsse | 50 | Unterer Teil des Schutzgehäuses |
| 12 | Fluidleitung | 52 | Rollen |
| 14 | Fluidleitung | 54 | Saugschläuche |
| 16 | Flüssigkeitsreservoir | | |
| 18 | Füllstandsmesseinrichtung | | |
| 20 | Hydraulikpumpe | | |
| 22 | Rückschlagventil | | |
| 24 | Filter | | |
| 26 | Druckmesseinrichtung | | |
| 28 | Fluidleitung | | |
| 30 | Steuerventil | | |
| 32 | Absperrventil | | |
| 34 | Hydraulikleitung | | |
| 36 | Absperrventil | | |
| 38 | Vakuumpumpe | | |
| 40 | Rückschlagventil | | |
| 42 | Ventil | | |
| 44 | Druckmesseinrichtung | | |
| 46 | Schutzgehäuse | | |
| 48 | Oberer Teil des Schutzgehäuses | | |

## Patentansprüche

1. Prüfeinrichtung zum Prüfen von fluidführenden Bauteilen, insbesondere fluidführenden Armaturen und/oder fluidführenden Schläuchen, umfassend mindestens einen Prüfanschluss (10) zum Anschließen mindestens eines zu prüfenden Bauteils, weiter umfassend mindestens eine Druckeinrichtung (20) zum Erzeugen eines vorgegebenen Prüfdrucks in dem zu prüfenden Bauteil und/oder mindestens eine Unterdruckeinrichtung (38) zum Erzeugen eines vorgegebenen Unterdrucks in dem zu prüfenden Bauteil, wobei die Prüfeinrichtung eine Steuereinrichtung (32) umfasst, die dazu ausgebildet ist, einen Prüfvorgang des mindestens einen zu prüfenden Bauteils nach Vorgabe einer Bedienperson durchzuführen, **dadurch gekennzeichnet, dass** die Prüfeinrichtung ein Schutzgehäuse (46) umfasst, in dem sich der mindestens eine Prüfanschluss (10) und das mindestens eine zu prüfende Bauteil (54) während des Prüfvorgangs befinden, und dass das Schutzgehäuse (46) mindestens eine Zugangstür aufweist, die einen Schließsensor aufweist, wobei ein Start des Prüfvorgangs nur möglich ist, wenn der Schließsensor einen geschlossenen Zustand der mindestens einen Zugangstür signalisiert.

2. Prüfeinrichtung nach Anspruch 1, **dadurch gekennzeichnet, dass** die Druckeinrichtung (28) und/oder die Unterdruckeinrichtung (38) mindestens ein Steuerventil (30, 32, 36) und mindestens eine Druckmesseinrichtung (26, 44) umfasst, und dass die Steuereinrichtung (32) dazu ausgebildet ist, den Prüfvorgang durch Ansteuern des mindestens einen Steuerventils (30, 32, 36) durchzuführen, insbesondere auf Grundlage von Messwerten der mindestens einen Druckmesseinrichtung (26, 44).

3. Prüfeinrichtung nach einem der vorhergehenden Ansprüche, **dadurch gekennzeichnet, dass** die Steuereinrichtung (32) eine Anzeigeeinrichtung umfasst, und dass die Steuereinrichtung (32) dazu ausgebildet ist, einer Bedienperson visuell für den Prüfvorgang durchzuführende Schritte anzuzeigen.

4. Prüfeinrichtung nach einem der vorhergehenden Ansprüche, **dadurch gekennzeichnet, dass** die Steuereinrichtung (32) dazu ausgebildet ist, den Prüfvorgang nach einer Starteingabe als Vorgabe durch eine Bedienperson automatisch durchzuführen.

5. Prüfeinrichtung nach einem der vorhergehenden Ansprüche, **dadurch gekennzeichnet, dass** sie mindestens zwei Prüfanschlüsse (10) zum gleichzeitigen Anschließen von mindestens zwei zu prüfenden Bauteilen umfasst, dass die mindestens eine Druckeinrichtung (20) und/oder die mindestens eine Unterdruckeinrichtung (38) mit den mindestens zwei Prüfanschlüssen (10) gleichzeitig oder einzeln verbindbar ist, und dass die Steuereinrichtung (32) dazu ausgebildet ist, einen Prüfvorgang von mindestens zwei gleichzeitig an den mindestens zwei Prüfanschlüssen (10) angeschlossenen zu prüfenden Bauteilen oder von einem an einem der mindestens zwei Prüfanschlüsse (10) angeschlossenen zu prüfenden Bauteil durchzuführen.

6. Prüfeinrichtung nach Anspruch 5, **dadurch gekennzeichnet, dass** die mindestens eine Druckeinrichtung (20) und/oder die mindestens eine Unterdruckeinrichtung (38) über mindestens ein durch die Steuereinrichtung (32) ansteuerbares Steuerventil (30, 32, 36) wahlweise mit einem der mindestens zwei Prüfanschlüsse (10) oder mit mindestens zwei der mindestens zwei Prüfanschlüsse (10) verbindbar ist.

7. Prüfeinrichtung nach einem der vorhergehenden Ansprüche, **dadurch gekennzeichnet, dass** die mindestens eine Unterdruckeinrichtung (38) und die mindestens eine Druckeinrichtung (20)wahlweise mit dem mindestens einen Prüfanschluss (10) verbindbar sind, so dass in dem mindestens einen an den mindestens einen Prüfanschluss (10) angeschlossenen zu prüfenden Bauteil ohne Lösen von dem mindestens einen Prüfanschluss (10) nacheinander ein vorgegebener Unterdruck durch die Unterdruckeinrichtung (38) und ein vorgegebener Prüfdruck durch die Druckeinrichtung (20) erzeugt werden kann.

8. Prüfeinrichtung nach Anspruch 7, **dadurch gekennzeichnet, dass** die mindestens eine Unterdruckeinrichtung (38) und die mindestens eine Druckeinrichtung (20) über mindestens ein durch die Steuereinrichtung (32) ansteuerbares Steuerventil (30, 32, 36) wahlweise mit dem mindestens einen Prüfanschluss (10) verbindbar sind.

9. Prüfeinrichtung nach einem der vorhergehenden Ansprüche, **dadurch gekennzeichnet, dass** sie weiterhin ein auf ein dem Prüfanschluss (10) abgewandtes Ende des zu prüfenden Bauteils aufsetzbares Sichtfenster umfasst, durch das während eines Prüfvorgangs die innere Beschaffenheit des zu prüfenden Bauteils geprüft werden kann.

10. Prüfeinrichtung nach Anspruch 9, **dadurch gekennzeichnet, dass** dem Sichtfenster eine Kamera zugeordnet ist, die das Innere des zu prüfenden Bauteils aufnimmt, wobei das Kamerabild auf einer Anzeigeeinrichtung angezeigt wird.

11. Prüfeinrichtung nach einem der Ansprüche 9 oder 10, **dadurch gekennzeichnet, dass** dem Sichtfenster weiterhin eine Lichtquelle zugeordnet ist.

12. Prüfeinrichtung nach einem der vorhergehenden Ansprüche, **dadurch gekennzeichnet, dass** sie weiterhin mindestens einen Entlüftungsanschluss aufweist, durch den beim Erzeugen des vorgegebenen Prüfdrucks und/oder beim Erzeugen des vorgegebenen Unterdrucks eine Entlüftung des mindestens einen zu prüfenden Bauteils erfolgt.

13. Prüfeinrichtung nach einem der vorhergehenden Ansprüche, **dadurch gekennzeichnet, dass** das Schutzgehäuse (46) mindestens ein hochschlagfestes Sichtfenster aufweist.

14. Prüfeinrichtung nach einem der vorhergehenden Ansprüche, **dadurch gekennzeichnet, dass** sie fahrbar auf mehreren Rollen (52) gelagert ist.

15. Prüfeinrichtung nach einem der vorhergehenden Ansprüche, **dadurch gekennzeichnet, dass** sie eine Batterie zum Bereitstellen der elektrischen Energie für die Steuereinrichtung und den Prüfvorgang aufweist.

16. Prüfeinrichtung nach einem der vorhergehenden Ansprüche, **dadurch gekennzeichnet, dass** sie eine Recyclingeinrichtung (16) umfasst, die dazu ausgebildet ist, im Zuge eines Prüfvorgangs verwendete Prüfflüssigkeit, insbesondere Prüfwasser, nach dem Prüfvorgang aufzufangen und für eine Wiederverwendung in einem weiteren Prüfvorgang bereitzustellen.

17. Prüfeinrichtung nach einem der vorhergehenden Ansprüche, **dadurch gekennzeichnet, dass** die Steuereinrichtung (32) eine bidirektionale Datenschnittstelle aufweist, über die sie mit einer externen Prüfdatenbank verbunden ist und/oder über die ein Fernzugriff auf die Steuereinrichtung (32) möglich ist.

## Claims

1. A test apparatus for testing fluid-conducting components, in particular fluid-conducting fittings and/or fluid-conducting hoses, comprising at least one test connection (10) for connecting at least one component to be tested, further comprising at least one pressure apparatus (20) for generating a specified test pressure in the component to be tested and/or at least one negative pressure apparatus (38) for generating a specified negative pressure in the component to be tested, wherein the test apparatus comprises a control apparatus (32) which is designed to perform a test procedure for the at least one component to be tested according to the specification of an operator, **characterized in that** the test apparatus comprises a protective housing (46) in which the at least one test connection (10) and the at least one component (54) to be tested are located during the test procedure, and **in that** the protective housing (46) has at least one access door which has a closing sensor, wherein the test procedure can only be started if the closing sensor signals a closed state of the at least one access door.

2. The test apparatus according to claim 1, **characterized in that** the pressure apparatus (28) and/or the negative pressure apparatus (38) comprises at least one control valve (30, 32, 36) and at least one pressure measuring apparatus (26, 44), and **in that** the control apparatus (32) is designed to perform the test procedure by actuating the at least one control valve (30, 32, 36), in particular on the basis of measured values of the at least one pressure measuring apparatus (26, 44).

3. The test apparatus according to one of the preceding claims, **characterized in that** the control apparatus (32) comprises a display apparatus, and **in that** the control apparatus (32) is designed to visually display steps to be performed for the test procedure to an operator.

4. The test apparatus according to one of the preceding claims, **characterized in that** the control apparatus (32) is designed to automatically perform the test procedure after a start input as a specification by an operator.

5. The test apparatus according to one of the preceding claims, **characterized in that** it comprises at least two test connections (10) for simultaneously connecting at least two components to be tested, **in that** the at least one pressure apparatus (20) and/or the at least one negative pressure apparatus (38) can be connected to the at least two test connections (10) simultaneously or individually, and **in that** the control apparatus (32) is designed to perform a test procedure for at least two components to be tested that are connected to the at least two test connections (10) simultaneously or for a component to be tested that is connected to one of the at least two test connections (10).

6. The test apparatus according to claim 5, **characterized in that** the at least one pressure apparatus (20) and/or the at least one negative pressure apparatus (38) can optionally be connected to one of the at least two test connections (10) or to at least two of the at least two test connections (10) via at least one control valve (30, 32, 36) that can be actuated by means of the control apparatus (32).

7. The test apparatus according to one of the preceding claims, **characterized in that** the at least one negative pressure apparatus (38) and the at least one pressure apparatus (20) can optionally be connected to the at least one test connection (10), such that a specified negative pressure can be generated by means of the negative pressure apparatus (38) and a specified test pressure can be generated by means of the pressure apparatus (20) one after the other in the at least one component to be tested that is connected to the at least one test connection (10) without detachment from the at least one test connection (10).

8. The test apparatus according to claim 7, **characterized in that** the at least one negative pressure apparatus (38) and the at least one pressure apparatus (20) can optionally be connected to the at least one test connection (10) via at least one control valve (30, 32 ,36) that can be actuated by means of the control apparatus (32).

9. The test apparatus according to one of the preceding claims, **characterized in that** it further comprises a viewing window that can be placed at an end of the component to be tested that is remote from the test connection (10), through which viewing window the internal condition of the component to be tested can be checked during a test procedure.

10. The test apparatus according to claim 9, **characterized in that** the viewing window is assigned a camera that records the interior of the component to be tested, wherein the camera image is displayed on a display apparatus.

11. The test apparatus according to one of claims 9 or 10, **characterized in that** the viewing window is further assigned a light source.

12. The test apparatus according to one of the preceding claims, **characterized in that** it further has at least one venting connection by means of which the at least one component to be tested is vented when the specified test pressure is generated and/or when the specified negative pressure is generated.

13. The test apparatus according to one of the preceding claims, **characterized in that** the protective housing (46) has at least one high-impact resistant viewing window.

14. The test apparatus according to one of the preceding claims, **characterized in that** it is movably mounted on multiple rollers (52).

15. The test apparatus according to one of the preceding claims, **characterized in that** it has a battery for providing the electrical energy for the control apparatus and the test procedure.

16. The test apparatus according to one of the preceding claims, **characterized in that** it comprises a recycling apparatus (16) which is designed to collect test liquid, in particular test water, used during a test procedure after the test procedure and to provide same for reuse in a further test procedure.

17. The test apparatus according to one of the preceding claims, **characterized in that** the control apparatus (32) has a bidirectional data interface via which it is connected to an external test database and/or via which remote access to the control apparatus (32) is possible.

## Revendications

1. Dispositif de contrôle destiné à contrôler des composants conduisant des fluides, en particulier des armatures conduisant des fluides et/ou des tuyaux conduisant des fluides, comportant au moins un raccord de contrôle (10) pour le raccordement d'au moins un composant à contrôler, comportant en outre au moins un dispositif de pression (20) destiné à produire une pression de contrôle prédéfinie dans le composant à contrôler et/ou au moins un dispositif de dépression (38) destiné à produire une dépression prédéfinie dans le composant à contrôler, dans lequel le dispositif de contrôle comporte un dispositif de commande (32), lequel est conçu pour effectuer une opération de contrôle de l'au moins un composant à contrôler conformément aux consignes d'un opérateur, **caractérisé en ce que** le dispositif de contrôle comporte un boîtier de protection (46), dans lequel se trouvent l'au moins un raccord de contrôle (10) et l'au moins un composant à contrôler (54) pendant l'opération de contrôle, et **en ce que** le boîtier de protection (46) présente au moins une porte d'accès présentant un capteur de fermeture, dans lequel un démarrage de l'opération de contrôle n'est possible que lorsque le capteur de fermeture signale un état fermé de l'au moins une porte d'accès.

2. Dispositif de contrôle selon la revendication 1, **caractérisé en ce que** le dispositif de pression (28) et/ou le dispositif de dépression (38) comportent au moins une soupape de commande (30, 32, 36) et au moins un dispositif de mesure de pression (26, 44), et **en ce que** le dispositif de commande (32) est conçu pour effectuer l'opération de contrôle en actionnant l'au moins une soupape de commande (30, 32, 36), en particulier sur la base de valeurs de mesure de l'au moins un dispositif de mesure de pression (26, 44).

3. Dispositif de contrôle selon l'une des revendications précédentes, **caractérisé en ce que** le dispositif de commande (32) comporte un dispositif d'affichage, et **en ce que** le dispositif de commande (32) est conçu pour indiquer visuellement des étapes à exécuter pour l'opération de contrôle à un opérateur.

4. Dispositif de contrôle selon l'une des revendications précédentes, **caractérisé en ce que** le dispositif de commande (32) est conçu pour effectuer automatiquement l'opération de contrôle après une entrée de démarrage en tant que consigne par un opérateur.

5. Dispositif de contrôle selon l'une des revendications précédentes, **caractérisé en ce qu'**il comporte au moins deux raccords de contrôle (10) pour le raccordement simultané d'au moins deux composants à contrôler, **en ce que** l'au moins un dispositif de pression (20) et/ou l'au moins un dispositif de dépression (38) peuvent être reliés simultanément ou individuellement aux au moins deux raccords de contrôle (10), et **en ce que** le dispositif de commande (32) est conçu pour effectuer une opération de contrôle d'au moins deux composants à contrôler raccordés simultanément aux au moins deux raccords de contrôle (10) ou d'un composant à contrôler raccordé à l'un des au moins deux raccords de contrôle (10).

6. Dispositif de contrôle selon la revendication 5, **caractérisé en ce que** l'au moins un dispositif de pression (20) et/ou l'au moins un dispositif de dépression (38) peuvent être reliés au choix à l'un des au moins deux raccords de contrôle (10) ou à au moins deux des au moins deux raccords de contrôle (10) par le biais d'au moins une soupape de commande (30, 32, 36) actionnable par le dispositif de commande (32).

7. Dispositif de contrôle selon l'une des revendications précédentes, **caractérisé en ce que** l'au moins un dispositif de dépression (38) et l'au moins un dispositif de pression (20) peuvent être reliés au choix à l'au moins un raccord de contrôle (10), de sorte qu'il est possible de produire consécutivement une dépression prédéfinie à l'aide du dispositif de dépression (38) et une pression de contrôle prédéfinie à l'aide du dispositif de pression (20) dans l'au moins un composant à contrôler raccordé à l'au moins un raccord de contrôle (10) sans détachement de l'au moins un raccord de contrôle (10).

8. Dispositif de contrôle selon la revendication 7, **caractérisé en ce que** l'au moins un dispositif de dépression (38) et l'au moins un dispositif de pression (20) peuvent être reliés au choix à l'au moins un raccord de contrôle (10) par le biais d'au moins une soupape de commande (30, 32, 36) actionnable par le dispositif de commande (32).

9. Dispositif de contrôle selon l'une des revendications précédentes, **caractérisé en ce qu'**il comporte en outre une fenêtre de visualisation apte à être placée sur une extrémité du composant à contrôler opposée au raccord de contrôle (10), à travers laquelle les caractéristiques intérieures du composant à contrôler peuvent être contrôlée pendant une opération de contrôle.

10. Dispositif de contrôle selon la revendication 9, **caractérisé en ce qu'**une caméra est associée à la fenêtre de visualisation, laquelle enregistre l'intérieur du composant à contrôler, dans lequel l'image de caméra est affichée sur un dispositif d'affichage.

11. Dispositif de contrôle selon l'une des revendications 9 ou 10, **caractérisé en ce qu'**une source de lumière est également associée à la fenêtre de visualisation.

12. Dispositif de contrôle selon l'une des revendications précédentes, **caractérisé en ce qu'**il présente en outre au moins un raccord d'aération, par lequel une aération de l'au moins un composant à contrôler est réalisée lors de la production de la pression de contrôle prédéfinie et/ou lors de la production de la dépression prédéfinie.

13. Dispositif de contrôle selon l'une des revendications précédentes, **caractérisé en ce que** le boîtier de protection (46) présente au moins une fenêtre de visualisation hautement résistante aux chocs.

14. Dispositif de contrôle selon l'une des revendications précédentes, **caractérisé en ce qu'**il est monté de façon déplaçable sur plusieurs roulettes (52).

15. Dispositif de contrôle selon l'une des revendications précédentes, **caractérisé en ce qu'**il présente une batterie destinée à fournir l'énergie électrique nécessaire au dispositif de commande et à l'opération de contrôle.

16. Dispositif de contrôle selon l'une des revendications précédentes, **caractérisé en ce qu'**il comporte un dispositif de recyclage (16), lequel est conçu pour récupérer, après une opération de contrôle, du liquide de contrôle utilisé pendant l'opération de contrôle, en particulier de l'eau de contrôle, et pour la mettre à disposition pour une réutilisation dans une autre opération de contrôle.

17. Dispositif de contrôle selon l'une des revendications précédentes, **caractérisé en ce que** le dispositif de commande (32) présente une interface de données bidirectionnelle, par laquelle il peut être relié à une banque de données de contrôle externe et/ou laquelle permet un accès à distance au dispositif de commande (32).
